# FASCICULE DE BREVET EUROPEEN

(11) **EP 0 470 011 B1**
(45) Date de publication et mention de la délivrance du brevet: **20.09.1995**
(21) Numéro de dépôt: 91420240.3
(22) Date de dépôt: 10.07.1991
(51) Int. Cl.: H02B 1/06

(54) **Obturateur fractionnable d'un coffret d'appareillage électrique**
Brechbares Verschlussstück für ein Gehäuse eines elektrischen Gerätes
Breakable closing member for an electrical apparatus housing

(30) Priorité: 30.07.1990 FR 9009809
(43) Date de publication de la demande: 05.02.1992
(73) Titulaire: SCHNEIDER ELECTRIC SA, 92100 Boulogne Billancourt (FR)
(72) Inventeur: Balaud, Philippe, F-38050 Grenoble Cedex (FR); Pellicano, Joseph, F-38050 Grenoble Cedex (FR); Velletaz, Gilbert, F-38050 Grenoble Cedex (FR)
(74) Mandataire: Hecké, Gérard

(56) Documents cités:
- DE-A- 2 844 035
- US-A- 1 952 719
- US-A- 3 743 892
- US-A- 3 899 101

## Description

### OBTURATEUR FRACTIONNABLE D'UN COFFRET D'APPAREILLAGE ELECTRIQUE.

L'invention est relative à un obturateur fractionnable d'une ouverture d'un plastron ou capot en matière plastique moulée d'un coffret d'appareillage électrique, pour adapter la grandeur de l'ouverture au nombre d'appareils logés dans le coffret, comprenant des parties fractionnables successivement, notamment au pas de 9 ou de 18 mm, venant de moulage avec le plastron.

Le capot ou le plastron d'un coffret ou boîtier d'appareillage électrique, notamment de distribution terminale, comporte une ouverture de passage de la partie avant des appareils logés dans le coffret. La largeur de cette ouverture correspond au nombre maximal d'appareils pouvant être logés dans le coffret, et il est courant d'obturer la ou les parties de l'ouverture non occupées par un appareil électrique, par une plaque obturatrice facilement amovible lors de l'adjonction d'un appareil additionnel. Il a déjà été proposé, par exemple d'après le document US-A-3 743 892, de clipser des plaques obturatrices sur les bords de l'ouverture, les dimensions de ces plaques correspondant au module de l'appareillage. Ces plaques doivent être livrées avec le boîtier ou être clipsées sur l'ouverture avant la livraison du boîtier, ce qui complique cette livraison. Il est également connu de réaliser l'ouverture par des parties défonçables, mais il est très difficile de limiter, lors du défonçage, la taille exacte de l'ouverture, et lorsque l'ouverture réalisée est trop grande, il est pratiquement impossible de rattraper l'écart.

Le but de la présente invention est de réaliser un obturateur venant de moulage avec le plastron ou le capot, et facilement fractionnable par l'utilisateur.

L'obturateur selon l'invention est décrit dans la revendication 1.

L'effort croissant de fractionnement permet de séparer successivement les parties fractionnables sans risque de séparation des parties adjacentes. On enlève ainsi les parties fractionnables les unes après les autres, jusqu'à atteindre la taille voulue de l'ouverture. Il est bien entendu possible d'enlever plusieurs parties fractionnables en une seule fois, si l'on prend soin d'exercer l'effort de fractionnement sur l'ensemble des parties à enlever. En tous les cas, les parties suivantes restent solidaires du plastron ou du capot. L'effort de fractionnement peut être gradué en augmentant la section des languettes de rattachement des parties fractionnables, ou en utilisant des languettes de même section, dont le nombre croît avec la distance du centre de l'ouverture. Les languettes brisables présentent avantageusement des zones affaiblies de section réduite, qui définissent le point de brisure, et cette zone est de préférence voisine du bord de l'ouverture, de façon à enlever avec la partie fractionnable, la languette de liaison. Les languettes brisables peuvent s'étendrent entre les bords de l'ouverture et les parties fractionnables, et/ou entre les parties fractionnables adjacentes.

Dans un mode de mise en oeuvre préféré, le nombre de languettes reliant chaque partie fractionnable au bord de l'ouverture est constant, tandis que le nombre de languettes brisables entre les parties fractionnables adjacentes croît avec la distance de ces parties du centre de l'ouverture. Les languettes brisables constituent des canaux d'alimentation des parties fractionnables lors de la coulée, et l'alimentation centrale évite les bords de jonction. La partie centrale de l'ouverture est avantageusement démunie d'obturateur pour laisser libre un orifice facilitant la préhension des parties fractionnables.

L'obturateur est applicable à des plastrons de coffrets ou boîtiers d'appareillage électrique, ainsi qu'à des capots de tels boîtiers, mais il est clair qu'elle peut être utilisée pour tout autre plaque moulée, en matière plastique présentant des parties défonçables, ou pouvant être ouvertes.

D'autres avantages ressortiront plus clairement de la description qui va suivre, d'un mode de mise en oeuvre de l'invention, donné à titre d'exemple non limitatif, et représenté sur le dessin annexé dans lequel:

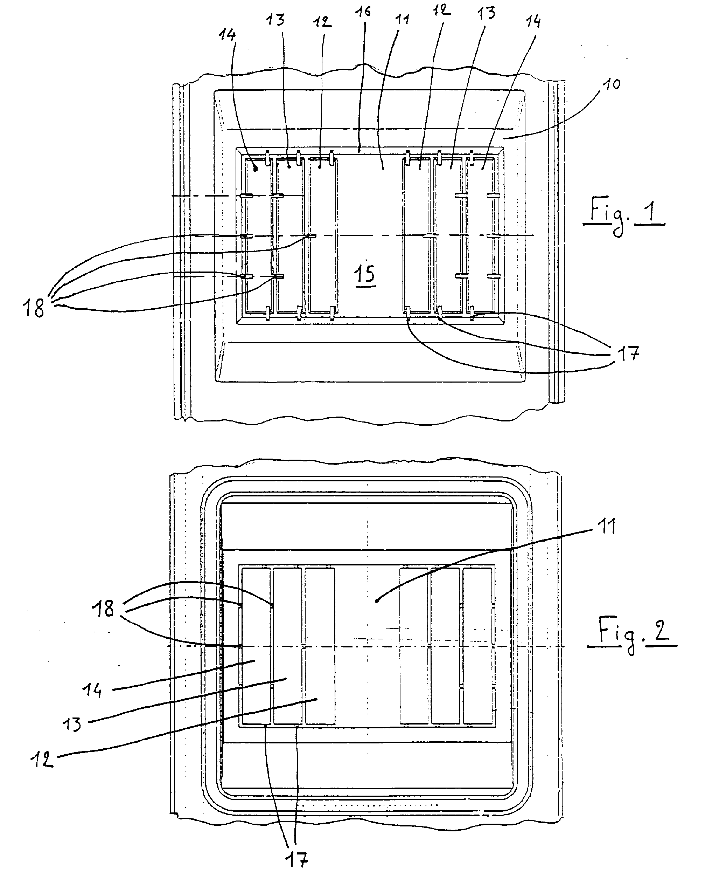

- la figure 1 est une vue de derrière d'une ouverture de plastron équipée d'obturateurs fractionnables selon l'invention;
- la figure 2 est une vue de devant de l'ouverture selon la figure 1;

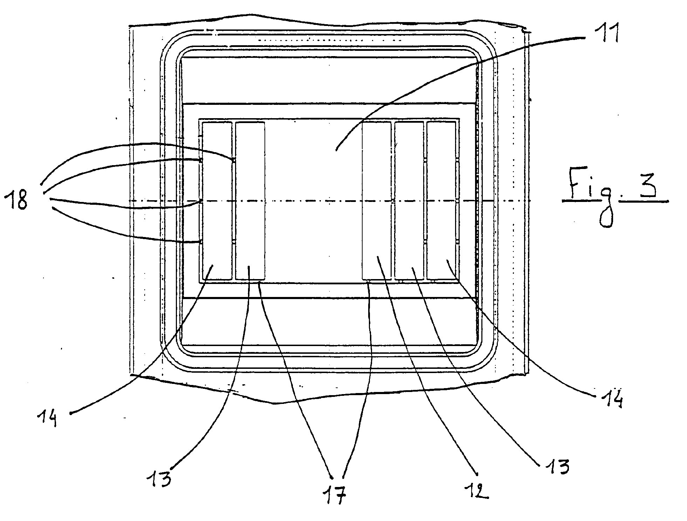

- la figure 3 est une vue analogue à celle de la figure 2 montrant l'ouverture dont l'une des parties fractionnables est enlevée.

Sur les figures, un capot 10 d'un coffret d'appareillage électrique, présente une ouverture 11 de passage de la partie avant de l'appareillage électrique logé dans le coffret. Le capot 10 peut bien entendu être un plastron ou toute autre paroi ayant une ouverture rectangulaire 11, et les appareils (non représentés) sont de préférence du type modulaire. L'ouverture 11 est soit totalement, soit de la manière représentée sur les figures, partiellement obturée par des parties fractionnables 12,13,14 disposées symétriquement de part et d'autre de l'orifice central 15 de l'ouverture 11. Les parties fractionnables 12,13,14 viennent de moulage avec le capot 10 en matière plastique, et chaque partie de forme rectangulaire a une largeur correspondant au module des appareils, et une longueur correspondant à la largeur de l'ouverture 11. Les petits côtés des parties fractionnables 12,13,14 sont reliés au bord adjacent 16 de l'ouverture 11, par des languettes brisables 17, en l'occurrence par une languette brisable 17 pour chaque petit coté. D'une manière analogue, les grands côtés des parties fractionnables 12,13,14 sont reliés entre eux par des languettes brisables 18. La partie fractionnable 12 la plus proche du centre de l'ouverture 11, est reliée à la partie fractionnable adjacente par une seule languette brisable 18, tandis que la deuxième partie fractionnable 13 est reliée à la troisième partie fractionnable 14, la plus éloignée du centre de l'ouverture 11 par deux languettes brisables 18. Cette troisième partie fractionnable 14 est elle-même reliée au petit côté adjacent de l'ouverture 11 par trois languettes brisables 18, le nombre de languettes brisables augmentant avec l'écartement de la partie fractionnable du centre de l'ouverture 11. Les languettes brisables 17,18 viennent bien entendu de moulage avec le capot 10, et elles sont constituées par les canaux d'alimentation des parties 12,13,14. Le capot 10 avec les parties fractionnables 12,13,14 constitue un ensemble monobloc, dont l'ouverture 11 est partiellement ou totalement obturée. La taille de l'ouverture 11 peut être agrandie pour l'adapter au nombre d'appareils logés dans le coffret, en enlevant une ou plusieurs parties fractionnables 12,13,14. A cet effet, il suffit d'exercer sur la partie fractionnable 12, la plus proche du centre, un effort suffisant pour briser les deux languettes brisables 17 reliant cette partie 12 au bord 16, et la languette brisable 18 de liaison avec la partie adjacente 13. La languette brisable 18 transmet à la partie fractionnable adjacente 13, une force de rupture, mais cette force est insuffisante pour briser les quatre languettes brisables 17,18 de maintien de la partie adjacente 13. Seule la partie fractionnable 12 est ainsi séparée de l'ouverture 11, et d'une manière analogue, l'ouverture peut être agrandie en exerçant un effort sur la partie fractionnable adjacente 13, pour rompre les languettes brisables 17,18 correspondantes. Les parties fractionnables 12,13,14 sont ainsi enlevées successivement sans risque d'un enlèvement en un seul bloc. Il est bien entendu possible d'enlever plusieurs parties fractionnables simultanément en exerçant un effort sur l'ensemble des parties devant être enlevées, mais cet enlèvement est volontaire et non intempestif. Les appareils sont en général centrés dans l'ouverture 11, et on enlève donc en premier lieu, les parties fractionnables centrales 12, puis les parties suivantes 13,14.

La section des languettes brisables 17,18 est suffisamment faible pour ne pas exiger des efforts de rupture trop importants, et il est avantageux de prévoir une zone de section restreinte, constituant la zone de rupture. Cette zone est voisine du bord 16, de manière à ce que la partie brisée de la languette 17 reste solidaire de la partie fractionnée 12,13,14. D'une manière analogue, les languettes brisables 18 entre les parties fractionnables présentent une zone de section restreinte, de façon à enlever la languette avec la partie fractionnable, et à conserver un bord franc de limitation de l'ouverture 11. Les languettes brisables 17,18 sont disposées sur la face arrière de l'ouverture 11 pour des raisons d'esthétique, et le fait de prévoir des languettes brisables 18 entre les parties fractionnables 12,13,14, permet une alimentation par le côté lors du moulage, évitant une zone centrale de jonction pouvant laisser des traces inesthétiques.

Il est clair que le nombre de parties fractionnables peut être quelconque, la seule exigence étant l'augmentation de l'effort de fractionnement, croissant en s'écartant du centre de l'ouverture 11. Cette augmentation peut résulter de la manière décrite ci-dessus, par un nombre supérieur de languettes brisables 18, ou par des sections croissantes de ces languettes 17,18. Le nombre croissant peut concerner uniquement les languettes brisables entre les parties fractionnables 12,13,14, ou inversement concerner uniquement les languettes brisables 17 entre les parties fractionnables 12,13,14 et le bord 16 de l'ouverture 11, ou concerner à la fois les deux types de languettes 17,18.

## Revendications

1. Obturateur fractionnable d'une ouverture (11) d'un plastron ou capot (10) en matière plastique moulée d'un coffret d'appareillage électrique pour adapter la grandeur de l'ouverture (11) au nombre d'appareils logés dans le coffret, comprenant des parties fractionnables (12, 13, 14) successivement, notamment au pas de 9 ou de 18 mm, venant de moulage avec le plastron (10), caractérisé en ce que les parties fractionnables (12, 13, 14) sont reliées au plastron (10), et entre elles par des languettes brisables (17, 18), la section totale correspondant à l'ensemble des languettes (17, 18) associées à une partie fractionnable (12, 13, 14) augmentant avec l'écartement de la partie fractionnable du centre de l'ouverture, de sorte que l'effort de fractionnement de chaque partie fractionnable progresse avec ledit écartement.

2. Obturateur selon la revendication 1 d'une ouverture rectangulaire (11), caractérisé en ce que toutes les parties fractionnables (12, 13, 14) de forme rectangulaire ont une même longueur correspondant à la largeur de l'ouverture (11), que les parties fractionnables (12, 13, 14) sont accolées les unes aux autres par leurs grands côtés, que les languettes brisables (17) de liaison d'une partie fractionnable avec le plastron (10) sont disposées sur les petits côtés de cette partie ; et que les languettes brisables (18) de liaison entre deux parties fractionnables (12, 13, 14) adjacentes, sont disposées sur leurs grands côtés.

3. Obturateur selon la revendication 1 ou 2, caractérisé en ce que lesdites languettes (17, 18) sont de même section brisable, le nombre de languettes (17,18) de liaison associées à une partie fractionnable (12, 13, 14) augmentant avec ledit écartement.

4. Obturateur selon la revendication 1, 2 ou 3, caractérisé en ce que toutes les parties fractionnables (12, 13, 14) sont reliées au plastron (10) par un même nombre de languettes brisables (17), et que les parties fractionnables (12, 13, 14) sont reliées entre elles par un nombre de languettes (18), croissant avec ledit écartement.

5. Obturateur selon la revendication 1,2,3 ou 4, caractérisé en ce que les languettes brisables (17,18) présentent une zone affaiblie de brisure, voisine du plastron ou de la partie fractionnable restante, de façon que la languette reste solidaire de la partie fractionnable enlevée.

6. Obturateur selon l'une quelconque des revendications précédentes, caractérisé en ce que les languettes brisables (17,18) constituent des canaux d'alimentation de moulage.

7. Obturateur selon l'une quelconque des revendications précédentes, caractérisé en ce qu'il comporte des parties fractionnables (12,13,14) disposées de part et d'autre d'un orifice central (15) de l'ouverture (11).

## Patentansprüche

1. Ablängbare Blende für einen Ausschnitt (11) einer als Kunststoff-Formteil ausgeführten Frontplatte oder Abdeckung (10) eines Installationsgehäuses für elektrische Schaltgeräte zur Anpassung der Größe des Ausschnitts (11) an die Zahl der im Installationsgehäuse montierten Schaltgeräte, wobei die Blende aus nacheinander, insbesondere in einem Teilungsmaß von 9 oder 18 mm, an die Abdeckplatte angeformten, abtrennbaren Segmenten (12, 13, 14) besteht, dadurch gekennzeichnet, daß die abtrennbaren Segmente (12, 13, 14) über herausbrechbare Verbindungsstege (17, 18) mit dem Rand (16) des Ausschnitts (11) sowie untereinander verbunden sind, wobei der Gesamtquerschnitt sämtlicher, einem abtrennbaren Segment (12, 13, 14) zugeordneten herausbrechbaren Stege (17, 18) mit dem Abstand von dem in der Ausschnittmitte angeordneten abtrennbaren Segment zunimmt, derart daß die zum Herausbrechen jedes abtrennbaren Segments erforderliche Bruchkraft mit dem genannten Abstand ansteigt.

2. Blende nach Anspruch 1 für einen Rechteckausschnitt (11), dadurch gekennzeichnet, daß sämtliche rechteckigen abtrennbaren Stege (12, 13, 14) die gleiche Länge entsprechend der Breite des Ausschnitts (11) aufweisen, daß die abtrennbaren Segmente (12, 13, 14) mit ihren Längsseiten aneinandergereiht sind, daß die herausbrechbaren Stege (17) zur Verbindung eines abtrennbaren Segments mit der Abdeckung (10) an der Schmalseite dieses Segments angeordnet sind und daß die herausbrechbaren Stege (18) zur Verbindung von zwei aneinandergrenzenden abtrennbaren Segmenten (12, 13, 14) auf deren Längsseiten angeordnet sind.

3. Blende nach Anspruch 1 oder 2, dadurch gekennzeichnet, daß die genannten Verbindungsstege (17, 18) die gleiche ausbrechbare Querschnittsfläche aufweisen, wobei die Anzahl der einem abtrennbaren Segment (12, 13, 14) zugeordneten Verbindungsstege (17, 18) mit dem genannten Abstand zunimmt.

4. Blende nach Anspruch 1, 2 oder 3, dadurch gekennzeichnet, daß sämtliche abtrennbaren Segmente (12, 13, 14) durch eine gleiche Anzahl von herausbrechbaren Stegen (17) mit der Abdeckung (10) verbunden sind und daß die abtrennbaren Segmente (12, 13, 14) untereinander über Stege (18) verbunden sind, deren Anzahl mit den genannten Abstand steigt.

5. Blende nach Anspruch 1, 2, 3 oder 4, dadurch gekennzeichnet, daß die herausbrechbaren Stege (17, 18) eine in der Nähe der Frontplatte bzw. des stehenbleibenden Segments angeordnete Sollbruchstelle mit geringerem Querschnitt aufweisen, so daß der betreffende Steg mit dem entfernten abtrennbaren Segment verbunden bleibt.

6. Blende nach irgendeinem der vorhergehenden Ansprüche, dadurch gekennzeichnet, daß die herausbrechbaren Stege (17, 18) Einfüllkanäle für das Spritzgießen des Formteils darstellen.

7. Blende nach irgendeinem der vorhergehenden Ansprüche, dadurch gekennzeichnet, daß sie abtrennbare Segmente (12, 13, 14) umfaßt, die zu beiden Seiten einer Mittelöffnung (15) des Ausschnitts (11) angeordnet sind.

## Claims

1. A sectionable blanking plate of an opening (11) of a front plate or cover (10) made of moulded plastic material for an electrical switchgear enclosure to match the size of the opening (11) to the number of switchgear devices housed in the enclosure, comprising successively sectionable parts (12, 13, 14), notably with a pitch of 9 or 18 mm, moulded with the front plate (10), characterized in that the sectionable parts (12, 13, 14) are secured to the front plate (10) and to one another by breakable tabs (17, 18), the total cross-section corresponding to the set of tabs (17, 18) associated to a sectionable part (12, 13, 14) increasing with the distance of the sectionable part from the centre of the opening, in such a way that the breaking force of each sectionable part progresses with said distance.

2. The blanking plate according to claim 1 for a rectangular opening (11), characterized in that all the rectangular-shaped sectionable parts (12, 13, 14) have the same length corresponding to the width of the opening (11), that the sectionable parts (12, 13, 14) are adjoined to one another via their large sides, that the breakable tabs (17) securing a sectionable part to the front plate (10) are arranged on the small sides of this part, and that the breakable tabs (18) securing two adjacent sectionable parts (12, 13, 14) are arranged on their large sides.

3. The blanking plate according to claim 1 or 2, characterized in that said tabs (17, 18) have the same breakable cross-section, the number of securing tabs (17, 18) associated to a sectionable part (12, 13, 14) increasing with said distance.

4. The blanking plate according to claim 1, 2 or 3, characterized in that all the sectionable parts (12, 13, 14) are secured to the front plate (10) by the same number of breakable tabs (17), and that the sectionable parts (12, 13, 14) are secured to one another by a number of tabs (18) increasing with said distance.

5. The blanking plate according to claim 1, 2, 3 or 4, characterized in that the breakable tabs (17, 18) present a weakened breaking zone, close to the front plate or to the remaining breakable part, so that the tab remains joined to the removed sectionable part.

6. The blanking plate according to any one of the above claims, characterized in that the breakable tabs (17, 18) constitute moulding feed channels.

7. The blanking plate according to any one of the above claims, characterized in that it comprises sectionable parts (12, 13, 14) arranged on each side of a central orifice (15) of the opening (11).
